# EUROPÄISCHE PATENTSCHRIFT

(11) **EP 3 479 459 B1**
(45) Veröffentlichungstag und Bekanntmachung des Hinweises auf die Patenterteilung: **28.09.2022**
(21) Anmeldenummer: 17723295.6
(22) Anmeldetag: 26.04.2017
(51) Int. Cl.: H02K 1/28, H02K 1/27

(54) **ROTOR MIT ROTORSCHRÄGUNG FÜR EINE ELEKTRISCHE MASCHINE UND ELEKTROMOTOR FÜR DEN FAHRANTRIEB EINES KRAFTFAHRZEUGS**
ROTOR WITH SKEWED ROTOR CONFIGURATION FOR AN ELECTRIC MACHINE, AND ELECTRIC MOTOR FOR THE TRACTION DRIVE OF A MOTOR VEHICLE
ROTOR À INCLINAISON POUR MACHINE ÉLECTRIQUE ET MOTEUR ÉLECTRIQUE POUR LA PROPULSION D'UN VÉHICULE AUTOMOBILE

(30) Priorität: 01.07.2016 DE 102016212004
(43) Veröffentlichungstag der Anmeldung: 08.05.2019
(73) Patentinhaber: Volkswagen Aktiengesellschaft, 38440 Wolfsburg (DE)
(72) Erfinder: WETTERAU, Lars, 34131 Kassel (DE); SCHOLZ, Sebastian Christoph, 30175 Hannover (DE)
(86) Internationale Anmeldenummer: PCT/EP2017/059982
(87) Internationale Veröffentlichungsnummer: WO 2018/001600

(56) Entgegenhaltungen:
- EP-A2- 2 549 624
- WO-A2-2015/059012
- US-A1- 2016 111 927

## Beschreibung

Die Erfindung betrifft einen Rotor für eine elektrische Maschine, insbesondere für einen Elektromotor für den Fahrantrieb (Elektroantrieb) eines Kraftfahrzeugs mit Elektro- oder Hybridantrieb, mit einer Rotorwelle oder einem Rotorträger und mehreren mittels Welle-Nabe-Verbindung darauf verdrehsicher angeordneten Rotorblechpaketen.

Die Erfindung betrifft ferner einen Elektromotor für den Fahrantrieb eines Kraftfahrzeugs mit Elektro- oder Hybridantrieb.

Die für den Fahrantrieb von Kraftfahrzeugen verwendeten Elektromotoren weisen für gewöhnlich einen Stator (bzw. Ständer) und einen darin drehbar bzw. rotierbar gelagerten Rotor (bzw. Läufer) auf. Zumeist handelt es sich um bürstenlose Synchronmotoren. Sowohl der Stator als auch der Rotor sind typischerweise geblecht ausgeführt, d. h. aus einzelnen zu Blechpaketen zusammengefassten Stator- bzw. Rotorblechen zusammengebaut.

Die DE 10 2011 084 425 A1 beschreibt einen Rotor mit einer Vielzahl von Rotorblechen, die mindestens zu einem Rotorblechpaket zusammengefügt sind, und mit einer Vielzahl von Permanentmagneten, die in zwischen den Speichen des Rotorblechpakets vorgesehenen Ausnehmungen angeordnet sind. Die Rotorbleche weisen eine Nabe auf. In der Nabe ist eine Verdrehsicherungseinrichtung vorgesehen, welche derart ausgebildet ist, dass die Rotorbleche verdrehsicher auf einer Rotorwelle montierbar sind. Eine Verdrehsicherungseinrichtung kann als Presspassung, als Nut mit einer Feder, als Keilwelle, als Polygonwelle oder auf jede andere kraftschlüssige, formschlüssige, stoffschlüssige oder vorgespannte Art zum Erzeugen einer Welle-Nabe-Verbindung ausgebildet sein. Die drehsichere bzw. drehfeste Verbindung gewährleistet zum einen eine definierte radiale Ausrichtung der Rotorbleche. Zum anderen dient sie der Kraftübertragung vom Rotorblech bzw. Rotorblechpaket auf die Rotorwelle (und umgekehrt).

Welle-Nabe-Verbindungen sind ferner in der DE 10 2011 015 209 A1, DE 10 2008 040 714 A1 und DE 10 2005 059 018 A1 beschrieben.

Die aus dem Stand der Technik bekannten Welle-Nabe-Verbindungen als Bindeglied zwischen einem Elektroblechpaket und einer Rotorwelle oder einem Rotorträger (s. u.) stoßen hinsichtlich des übertragbaren Drehmoments zunehmend an ihre Grenzen, zumal die Verbindungen nicht in beliebigen Dimensionen ausführbar sind, sondern bei geringem Bauraum realisiert werden müssen. Indes sind bei begrenztem Bauraum Passfederverbindungen häufig nicht umsetzbar. Schweißverbindungen sind aufwändig, außerdem bestehen Einschränkungen hinsichtlich der Materialien sowie die Gefahr von Wärmeverzügen. Pressverbindungen sind durch Materialfestigkeiten begrenzt, außerdem sind diese aufwändig in der Herstellung und kontraproduktiv hinsichtlich Leichtbau.

Aufwändig ist mitunter auch die Herstellung einer sogenannten Rotorschrägung, bei der mehrere Blechpakete mit Winkelversatz auf einem Rotor oder Rotorträger angeordnet werden, um bspw. die Lauf- und Akustikeigenschaften des Elektromotors zu verbessern. Eine solche Rotorschrägung ist bspw. in der DE 10 2011 118 398 A1 beschrieben. Weiterer Stand der Technik ist WO 2015/059012 A2 und US2015380997.

Der Erfindung liegt die Aufgabe zugrunde, einen Rotor mit Rotorschrägung anzugeben, der einfach herstellbar ist und dessen Welle-Nabe-Verbindung zwischen den Rotorblechpaketen und der Rotorwelle bzw. dem Rotorträger trotz geringem Bauraum die Übertragung hoher Drehmomente ermöglicht.

Diese Aufgabe wird gelöst durch den mit dem Patentanspruch 1 beanspruchten erfindungsgemäßen Rotor. Mit einem nebengeordneten Patentanspruch erstreckt sich die Erfindung auch auf einen Elektromotor für den Fahrantrieb eines Kraftfahrzeugs, der einen erfindungsgemäßen Rotor aufweist. Bevorzugte Weiterbildungen und Ausgestaltungen der Erfindung ergeben sich analog für beide Erfindungsgegenstände aus den abhängigen Patentansprüchen, der nachfolgenden Beschreibung und der Zeichnung.

Der erfindungsgemäße Rotor ist dadurch gekennzeichnet, dass die Welle-Nabe-Verbindung zwischen den Rotorblechpaketen und der Rotorwelle oder dem Rotorträger als Steckverzahnung ausgebildet ist, wobei benachbarte Rotorblechpakete um wenigstens einen Zahnabstand versetzt auf die Rotorwelle oder den Rotorträger aufgesteckt sind und dadurch zueinander einen Winkelversatz aufweisen, wodurch sich eine Rotorschrägung ergibt. Bevorzugt sind wenigstens zwei axial benachbarte und insbesondere alle Rotorblechpakete mit Winkelversatz auf der Rotorwelle oder dem Rotorträger angeordnet.

Eine Rotorwelle ist ein stabförmiges, insbesondere massives Bauteil auf dem die Rotorblechpakete befestigt sind. Die axiale Länge kann ein Vielfaches des Durchmessers betragen. Ein Rotorträger ist bspw. ein als Topf oder Glocke ausgebildetes Bauteil an dem die Rotorblechpakete befestigt sind. Ein solcher Rotorträger ist auch in der Zeichnung dargestellt. Die axiale Länge kann nur einen Bruchteil des Durchmessers betragen.

Unter einer Steckverzahnung oder auch Passverzahnung wird eine formschlüssige Welle-Nabe-Verbindung verstanden, bei der die Rotorwelle bzw. der Rotorträger eine Außenverzahnung und die Naben der Rotorblechpakete Innenverzahnungen aufweisen, die formschlüssig ineinandergreifen und dadurch eine Vielfach-Mitnehmerverbindung bilden. Bei der Steckverzahnung handelt es sich bevorzugt um eine Spitz- bzw. Kerbverzahnung (Passverzahnung mit Kerbflanken) und insbesondere um eine Evolventenverzahnung (Passverzahnung mit Evolventenflanken). Insbesondere handelt es sich nicht um ein Keilwellenprofil mit geraden und parallelen Zahnflanken. Die Zähne bzw. Mitnehmer und Zahnlücken der Steckverzahnung sind sowohl an der Rotorwelle bzw. dem Rotorträger als auch an den Blechpaketnaben bevorzugt axial gerade ausgebildet (also nicht wendelartig oder dergleichen). Die auf der Rotorwelle bzw. dem Rotorträger angeordneten Rotorblechpakete sitzen für gewöhnlich fest (Festsitz), was insbesondere durch eine Presspassung, d. h. durch Aufpressen oder Aufschrumpfen der Blechpakete, bewerkstelligt wird. Prinzipiell ist auch ein Verschweißen oder Verlöten möglich. Im Vergleich zum Verschweißen oder Verlöten geht das Aufpressen oder Aufschrumpfen allerdings wesentlich schneller und außerdem bestehen hinsichtlich der Materialkombinationen weniger Einschränkungen und es besteht auch nicht die Gefahr von Wärmeverzügen. Grundsätzlich ist auch eine Verklebung möglich.

Unter dem Zahnabstand wird der Abstand zweier benachbarter Zähne der zur Steckverzahnung gehörenden Außenverzahnung und/oder Innenverzahnung verstanden, der sich aus einem Zahn und der daneben befindlichen Zahnlücke ergibt. Genau genommen ergibt sich der Abstand zwischen zwei benachbarten Zähnen aus der Zahndicke und der Lückenweite, wobei das rechnerische Maß auch als Teilung bezeichnet werden kann. Weiteres ergibt sich aus entsprechender Fachliteratur. Aus dem Zahnabstand bzw. die Teilung ergibt sich ein definierter Winkelversatz bzw. Schrägungswinkel zwischen versetzt bzw. verdreht auf die Rotorwelle bzw. den Rotorträger aufgesteckten Rotorblechpaketen, der bspw. als Schrägungswinkel pro Zahnabstand angegeben werden kann. Ohne Einstellen oder Ausrichten ergibt sich somit durch das um wenigstens einen Zahnabstand versetzte Anordnen der Rotorblechpakete auf der Rotorwelle bzw. dem Rotorträger zwangsläufig eine Verdrehung bzw. ein Winkelversatz um einen entsprechenden Schrägungswinkel, woraus eine definierte Rotorschrägung resultiert.

Durch die mittels Steckverzahnung geschaffene formschlüssige Verbindung zwischen den Rotorblechpaketen und der Rotorwelle bzw. dem Rotorträger wird bei geringem Platzbedarf die Übertragung hoher Drehmomente ermöglicht. Ferner ergibt sich eine hohe Positioniergenauigkeit der Rotorblechpakete und ein geringes Fehlerpotential bei der Montage, insbesondere bei Verwendung von Markierungen, wie nachfolgend noch näher erläutert. Die bspw. durch Ausstanzen hergestellten Rotorbleche für die Rotorblechpakete können identisch sein, d. h. es wird nur eine Rotorblechvariante benötigt, so dass der erfindungsgemäße Rotor viele Gleichteile aufweist. Sowohl die Innenverzahnung an den Naben der Rotorbleche bzw. der daraus gebildeten Rotorblechpakete als auch die Außenverzahnung an der Rotorwelle oder dem Rotorträger können wirtschaftlich hergestellt werden. Die Innenverzahnung kann bspw. beim Ausstanzen mit erzeugt werden. Die Außenverzahnung kann bspw. durch umformtechnische Verfahren (z. B. Axialumformen oder Walzen) erzeugt werden. Der erfindungsgemäße Rotor kann also einfach und wirtschaftlich hergestellt werden.

Die Rotorblechpakete sind bevorzugt mit einer Vielzahl von Taschen bzw. Magnettaschen für die Aufnahme von Permanentmagneten ausgebildet. Bevorzugt sind diese Taschen gleichmäßig verteilt angeordnet. Für die Effekte der Rotorschrägung, bspw. Verbesserung der Lauf- und Akustikeigenschaften, kommt es vor allem auf einen Winkelversatz zwischen den Taschen benachbarter Rotorblechpakete bzw. den darin angeordneten Magneten an (Schrägung der Magnete in axialer Richtung), der durch den generellen Winkelversatz zwischen den Rotorblechpaketen erreicht wird.

Benachbarte Rotorblechpakete können um mehrere Zahnabstände, vorzugsweise um wenigstens fünf und insbesondere um wenigstens sieben Zahnabstände, versetzt auf die Rotorwelle oder den Rotorträger aufgesteckt bzw. darauf angeordnet sein. Dadurch kann zwischen den Magnettaschen benachbarter Rotorblechpakete ein Winkelversatz bzw. Schrägungswinkel geschaffen werden, der faktisch kleiner ist als der bei einem einzelnen Zahnabstand ermöglichte Winkelversatz, was nachfolgend noch näher erläutert wird.

Die Steckverzahnung kann vollumfänglich ausgebildet sein (Nicht Teil der beanspruchten Erfindung). Hiermit ist gemeint, dass die Außenverzahnung an der Rotorwelle oder dem Rotorträger über den gesamten Außenumfang ausgebildet ist und/oder dass die Innenverzahnungen an den Rotorblechpaketen über den gesamten Innenumfang ausgebildet sind. Eine vollumfängliche Steckverzahnung eignet sich insbesondere für kleinerer Wellen- bzw. Trägerdurchmesser.

Eine vollumfänglich ausgebildete Steckverzahnung kann, insbesondere bei größeren Wellen- bzw. Trägerdurchmesser, hinsichtlich des zu übertragenden Drehmoments überdimensioniert sein. Bei hohen Zähnezahlen können fertigungsbedingte Toleranzen, wie insbesondere unvermeidbare Teilungsfehler, außerdem zu sehr hohen Fügekräften führen. Erfindungsgemäß ist daher vorgesehen, dass die Steckverzahnung bezüglich des Umfangs nur segment- bzw. abschnittsweise ausgebildet ist. Hierunter wird verstanden dass die Außenverzahnung an der Rotorwelle oder dem Rotorträger nur in bestimmten Außenumfangssegmenten bzw. - abschnitten ausgebildet ist (im folgenden auch als Außenverzahnungssegmente bezeichnet) und/oder dass die Innenverzahnungen an den Rotorblechpaketen nur in bestimmten

Innenumfangssegmenten bzw. -abschnitten ausgebildet sind (im folgenden auch als Innenverzahnungssegmente bezeichnet). Die Verzahnungen sind dadurch auch einfacher und wirtschaftlicher herstellbar. Die Steckverzahnung weist bspw. nur drei Segmente bzw. Verzahnungssegmente auf, d. h. drei Außenverzahnungssegmente und drei Innenverzahnungssegmente pro Rotorblechpaket), die gleichmäßig verteilt, d. h. in 120°-Abständen, ausgebildet sind. Es können aber auch nur zwei oder mehr als drei Segmente vorgesehen sein, die insbesondere gleichmäßig verteilt angeordnet sind. Erfindungsgemäß ist vorgesehen, dass die Außenverzahnungssegmente bzw. -abschnitte an der Rotorwelle oder dem Rotorträger mehr Zähne umfassen als die komplementären Innenverzahnungssegmente bzw. -abschnitte an den Rotorblechpaketen, oder umgekehrt. Dadurch wird ein versetztes Aufstecken begünstigt.

Auf einigen Zähnen der Steckverzahnung, bevorzugt sowohl an der Außenverzahnung als auch an der Innenverzahnung, können Markierungen, insbesondere stirnseitige Markierungen, aufgebracht sein, die beim Aufstecken der Rotorblechpakete auf die Rotorwelle oder den Rotorträger eine Orientierung (Winkelorientierung) ermöglichen und dadurch die Montage vereinfachen.

Der erfindungsgemäße Rotor ist für den Verbau in einer elektrischen Maschine vorgesehen. Bei dieser elektrischen Maschine handelt es sich bevorzugt um eine sogenannte Permanenterregte Synchronmaschine (PSM, PMSM), die als Generator und/oder als Elektromotor betreibbar ist. Besonders bevorzugt handelt es sich um einen Elektromotor (Synchronmotor) für den Fahrantrieb (Elektroantrieb) eines Kraftfahrzeugs mit Elektro- oder Hybridantrieb, wie mit dem nebengeordneten Patentanspruch beansprucht. Dieser Elektromotor ist typischerweise bürstenlos, d. h. ohne Schleifringe, ausgebildet und verfügt bauarttypisch über einen kompakten Aufbau, eine hohe Leistungsdichte und einen günstigen Wirkungsgrad.

Die Erfindung wird nachfolgend beispielhaft und in nicht einschränkender Weise mit Bezug auf die Zeichnung näher erläutert. In der Zeichnung zeigen:
- Fig. 1: einen Rotorträger in einer perspektivischen Ansicht;
- Fig. 2: ein einzelnes Rotorblech in einer axialen Draufsicht;
- Fig. 3: einen Rotorausschnitt in einer perspektivischen Ansicht; und
- Fig. 4: den Rotorausschnitt aus Fig. 3 in einer axialen Draufsicht.

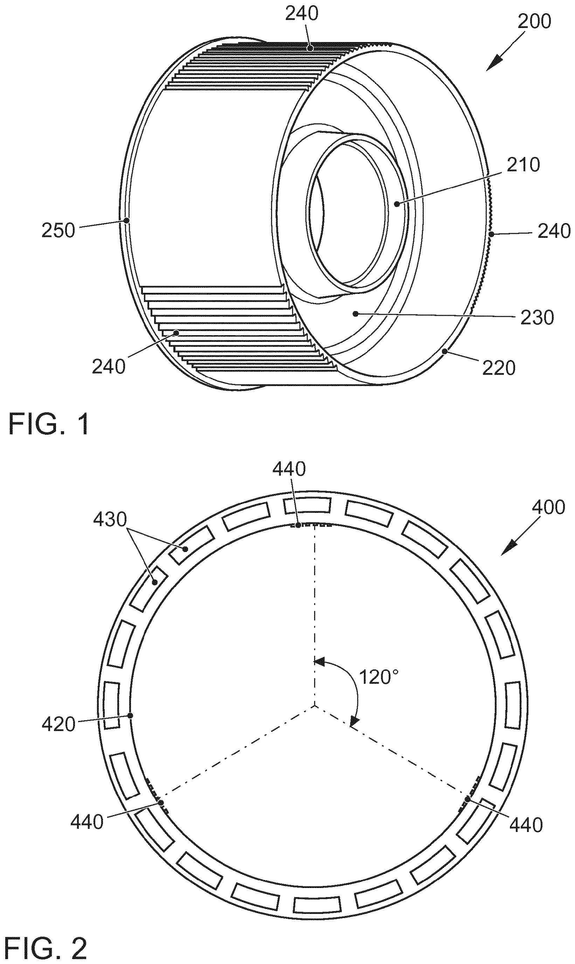

Der in Fig. 1 gezeigte Rotorträger 200 weist eine mittige Lagerbuchse 210 und eine diese konzentrisch umgebende Wandung 220 auf, die über einen Boden 230 verbunden sind, so dass sich eine topfartige Form ergibt. Der einstückige, metallische Rotorträger 200 ist und bspw. als Umformteil oder Dreh-/Frästeil hergestellt. Die Drehmomentanbindung an den Antriebsstrang eines Kraftfahrzeugs erfolgt über eine an der Rückseite des Bodens 130 angeordnete, in dieser Darstellung nicht sichtbare Kupplung. Mit 250 ist ein am Rotorträger 200 ausgebildeter Bund bezeichnet.

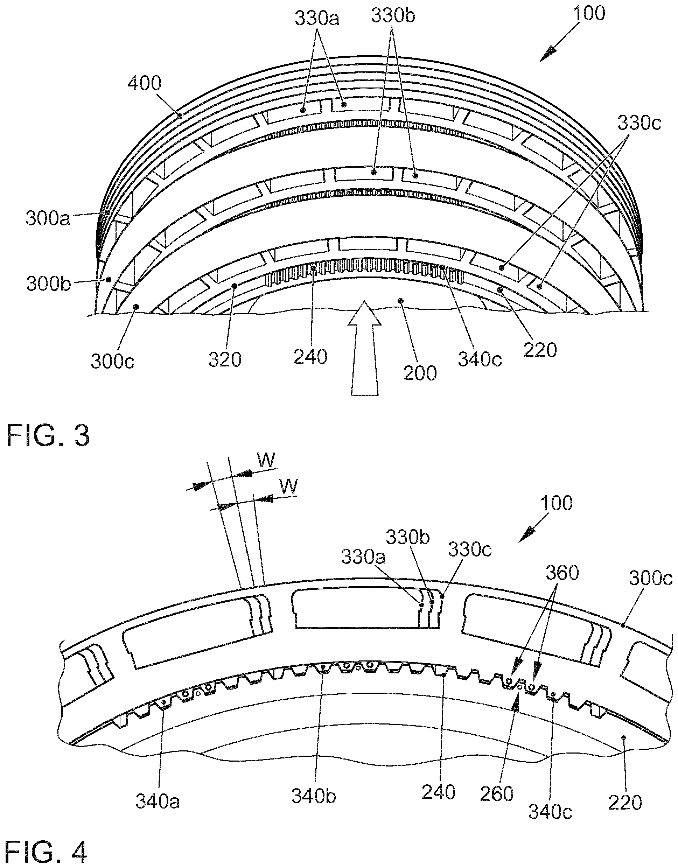

Das in Fig. 2 gezeigte Rotorblech 400 weist eine Nabe bzw. einen Nabenbereich 420 und gleichmäßig über den Umfang verteilt eine Vielzahl von Ausnehmungen bzw. Aussparungen 430 auf, die durch dünne radiale Stege getrennt sind. In der Nabe 420 sind mehrere Verzahnungsabschnitte 440 ausgebildet. Das einstückige, metallische Rotorblech 400 ist bspw. durch Ausstanzen aus einer Blechtafel (Elektroblech) hergestellt. Das Rotorblech 400 wird zusammen mit weiteren identischen Rotorblechen 400 zu einem Rotorblechpaket 300 (s. Fig. 3) gestapelt und gefügt (sogenanntes Paketieren), wofür nur eine Rotorblechvariante benötigt wird. Dabei werden die Ausnehmungen 430 und die Verzahnungsabschnitte 440 fluchtend ausgerichtet und bilden Taschen bzw. Magnettaschen 330 für die Aufnahme von Permanentmagneten sowie eine Nabe 320 mit Verzahnungssegmenten 340.

Dieses Rotorblechpaket 300 wird dann mit weiteren, für gewöhnlich identischen Rotorblechpaketen 300 auf den Rotorträger 200 aufgesteckt bzw. aufgeschoben, d. h., es ist nur eine Paketvariante erforderlich. Die Übertragung von Drehmomenten zwischen dem Rotorträger 200 und den darauf angeordneten Rotorblechpaketen 300 erfolgt formschlüssig mittels Welle-Nabe-Verbindungen in Gestalt einer Steck- bzw. Passverzahnung. Hierzu weisen die Außenumfangsfläche der Wandung 220 des Rotorträgers 200 eine segmentweise ausgebildete Außenverzahnung bzw. Außenverzahnungssegmente 240 und die Innenumfangsflächen bzw. Naben 320 der Rotorblechpakete 300 eine ebenfalls segmentweise ausgebildete Innenverzahnung bzw. Innenverzahnungssegmente 340 auf. In dem gezeigten Ausführungsbeispiel sind die Verzahnungssegmente 240 und 340 sowohl am Rotorträger 200 als auch an den Rotorblechpaketen 300 in 120°-Abständen angeordnet, wie in Fig. 2 veranschaulicht.

Fig. 3 zeigt den Ausschnitt eines Rotors 100 mit mehreren auf den Rotorträger 200 aufgesteckten identischen Rotorblechpaketen 300. Der Rotor 100 weist einen kurzen und kompakten Aufbau mit vergleichsweise großem Durchmesser auf. Die Bezugszeichen-Suffixe a, b und c beziehen sich auf die einzelnen Rotorblechpakete und deren Merkmale. In dem gezeigten Ausführungsbeispiel sind lediglich beispielhaft drei Rotorblechpakete 300a, 300b und 300c vorgesehen, die sowohl mit axialer Beabstandung als auch mit einem Winkelversatz bzw. einer Verdrehung auf dem Rotorträger 200 angeordnet sind. D. h, von Rotorblechpaket zu Rotorblechpaket ist eine Verdrehung realisiert. Durch den Winkelversatz zwischen den Rotorblechpaketen 300a/300b und 300b/300c wird erreicht, dass die Magnettaschen 330a/b/c der nebeneinander bzw. axial hintereinander angeordneten Rotorblechpakete 300 nicht fluchten, sondern um einen Schrägungswinkel W verdreht sind, wie in Fig. 4 veranschaulicht, wobei Fig. 4 eine Draufsicht auf den Rotor 100 gemäß dem Pfeil in Fig. 3 zeigt. Durch diesen Winkelversatz ist eine sogenannte Rotorschrägung geschaffen.

Erfindungsgemäß wird der Winkelversatz dadurch gebildet, dass benachbarte Rotorblechpakete 300 um mehrere Zahnabstände (zumindest wenigstens um einen Zahnabstand) versetzt auf den Rotorträger 200 aufgesteckt sind. Auch dies ergibt sich anschaulich aus Fig. 4. Das in dem gezeigten Ausschnitt dargestellte Außenverzahnungssegment 240 des Rotorträgers 200 umfasst insgesamt einundzwanzig Zähne, die für die nachfolgenden Betrachtungen im Uhrzeigersinn durchgezählt werden. Die Innenverzahnungssegmente 340a, 340b und 340c der Rotorblechpakete 300a, 300b und 330c umfassen jeweils nur sechs Zähne.

Die Rotorblechpakete 300a, 300b, 300c werden bei der Montage in dieser Reihenfolge (gemäß Pfeil in Fig. 3) auf den Rotorträger 200 aufgesteckt und dabei bspw. aufgepresst oder aufgeschrumpft oder auch aufgeklebt. Der Bund 250 am Rotorträger 200 dient als Anschlag und axiale Positionsvorgabe für das erste Rotorblechpaket 300a. Das erste Rotorblechpaket 300a ist so auf den Rotorträger 200 aufgesteckt, dass die Zähne dessen Innenverzahnungssegments 340a zwischen die Zähne 1 bis 7 des Außenverzahnungssegments 240 eingreifen. Die Zähne des zum zweiten Rotorblechpaket 300b gehörenden Innenverzahnungssegments 340b greifen zwischen die Zähne 8 bis 14 und die Zähne des zum dritten Rotorblechpaket 300c gehörenden Innenverzahnungssegments 340c greifen zwischen die Zähne 15 bis 21 des selben Außenverzahnungssegments 240 ein. Zwischen den anderen Verzahnungssegmenten bestehen identische Eingriffskonstellationen.

Die benachbarten Rotorblechpakete 300a/300b und 300b/300c weisen somit einen Versetzungsabstand von sieben Zähnen auf (siebenfacher Zahnabstand), wodurch zwischen den Magnettaschen 330a/330b und 330b/330c eine Verdrehung mit einem Schrägungswinkel W von weniger als 1° (< 1°) erreicht wird, obwohl die eigentliche Verdrehung zwischen den Rotorblechpaketen 300a/300b und 300b/300c wesentlich größer ist. Auf diese Weise erhält man zwischen den Magnettaschen 330a/330b und 330b/330c also einen Schrägungswinkel W, der kleiner ist als der mit einem Versetzungsabstand von nur einem Zahn (einfacher Zahnabstand) erzielbare Schrägungswinkel, ohne dass dies nachteiligen Effekt auf das Drehmomentübertragungsvermögen hat.

In äquivalenter Weise ist auch eine umgekehrte Verzahnungsanordnung möglich, d. h., die Innenverzahnungssegmente 340 an den Rotorblechpaketen 300 können mehr Zähne aufweisen als die Außenverzahnungssegmente 240 am Rotorträger 200.

Beim erfindungsgemäßen Rotor 100 wird die Rotorschrägung sozusagen über die Gestaltung der Steckverzahnung zwischen dem Rotorträger 200 (oder alternativ hierzu einer Rotorwelle) und den Rotorblechpaketen 300 bzw. deren einzelnen Rotorbleche 400 realisiert. D. h., es erfolgt eine Integration der Rotorschrägung in die Steck- bzw. Passverzahnung. Damit dies gelingt, ist die Teilung der Steckverzahnung so gestaltet, dass nach einer bestimmten Anzahl von Zähnen eine Verdrehung um den gewünschten Schrägungswinkel W erfolgt. Die Rotorschrägung wird also über die Teilung der Passverzahnung erreicht, was auch als teilungsintegrierte Rotorschrägung bezeichnet werden kann. Dies ist unabhängig davon, ob die Steckverzahnung vollumfänglich bzw. umlaufend oder nur segmentweise bzw. unterbrochen, wie in dem gezeigten Ausführungsbeispiel, ausgebildet ist. Die vorausgehenden Zahlenangaben sind nur auf das in den Figuren gezeigte Ausführungsbeispiel bezogen.

Wie in Fig. 4 gezeigt, sind einzelne Zähne der Innenverzahnungssegmente 340 und des Außenverzahnungssegments 240 mit stirnseitigen Markierungen 260 und 360 versehen, die bei der manuellen oder auch automatisierten Montage die Orientierung erleichtern und das Fehlerpotential minimieren. Zumindest an einem Außenverzahnungssegment 240 des Rotors 200 sind einzelne Zähne mit solchen Markierungen 260 versehen und zumindest an einem Innenverzahnungssegment 340 der Rotorblechpakete 300 sind benachbarte Zähne mit solchen Markierungen 360 versehen (oder umgekehrt). Bei der Montage werden die Rotorblechpakete 300 so ausgerichtet, dass die Markierungen 260 zwischen den benachbarten Markierungen 360 liegen.

Bei den Markierungen 260 und 360 handelt es sich bspw. um Punkte, Linien, Pfeile oder dergleichen. Die Markierungen 260 und 360 können bspw. beim Herstellen des Rotorträgers 200 und der Rotorbleche 400 bzw. der Rotorblechpakete 300 durch Einprägen, Aufdrucken, Gravieren oder dergleichen erzeugt werden.

### Bezugszeichenliste

- 100: Rotor
- 200: Rotorträger
- 210: Lagerbuchse
- 220: Wandung
- 230: Boden
- 240: Außenverzahnungssegment
- 250: Bund
- 260: Markierung
- 300: Rotorblechpaket
- 320: Nabe
- 330: Tasche
- 340: Innenverzahnungssegment
- 360: Markierung
- 400: Rotorblech
- 420: Nabe
- 430: Ausnehmung
- 440: Verzahnungsabschnitt
- W: Schrägungswinkel

## Patentansprüche

1. Rotor (100) für eine elektrische Maschine, insbesondere für einen Elektromotor für den Fahrantrieb eines Kraftfahrzeugs mit Elektro- oder Hybridantrieb, mit einer Rotorwelle oder einem Rotorträger (200) und mehreren mittels einer als Steckverzahnung ausgebildeten Welle-Nabe-Verbindung darauf verdrehsicher angeordneten Rotorblechpaketen (300,300a,300b,300c), wobei benachbarte Rotorblechpakete (300,300a,300b,300c) um wenigstens einen Zahnabstand versetzt auf die Rotorwelle oder den Rotorträger (200) aufgesteckt sind und dadurch zueinander einen Winkelversatz (W) aufweisen, **dadurch gekennzeichnet, dass**
die Steckverzahnung segmentweise ausgebildet ist, derart, dass die Außenverzahnung an der Rotorwelle oder dem Rotorträger (200) nur in bestimmten Außenumfangssegmenten ausgebildet ist und dass die Innenverzahnungen an den Rotorblechpaketen (300,300a,300b,300c) nur in bestimmten Innenumfangssegmenten ausgebildet sind,
wobei die Außenverzahnungssegmente (240) an der Rotorwelle oder dem Rotorträger (200) mehr Zähne umfassen als die Innenverzahnungssegmente (340,340a,340b,340c) an den Rotorblechpaketen (300,300a,300b,300c) oder umgekehrt die Innenverzahnungssegmente (340,340a,340b,340c) an den Rotorblechpaketen (300,300a,300b,300c) mehr Zähne umfassen als die Außenverzahnungssegmente (240) an der Rotorwelle oder dem Rotorträger (200).

2. Rotor (100) nach Anspruch 1,
**dadurch gekennzeichnet, dass**
die Rotorblechpakete (300) Taschen (330) für die Aufnahme von Permanentmagneten aufweisen.

3. Rotor (100) nach Anspruch 1 und insbesondere nach Anspruch 2,
**dadurch gekennzeichnet, dass**
benachbarte Rotorblechpakete (300) um mehrere Zahnabstände, vorzugsweise wenigstens fünf und insbesondere wenigstens sieben Zahnabstände, versetzt auf die Rotorwelle oder den Rotorträger (200) aufgesteckt sind.

4. Rotor (100) nach einem der vorausgehenden Ansprüche,
**dadurch gekennzeichnet, dass**
die Steckverzahnung drei Segmente (240, 340) aufweist, die in 120°-Abständen ausgebildet sind.

5. Rotor (100) nach einem der vorausgehenden Ansprüche,
**dadurch gekennzeichnet, dass**
an einigen Zähnen der Steckverzahnung Markierungen (260, 360) aufgebracht sind, die beim Aufstecken der Rotorblechpakete (300) auf die Rotorwelle oder den Rotorträger (200) eine Orientierung ermöglichen.

6. Elektromotor für den Fahrantrieb eines Kraftfahrzeugs mit Elektro- oder Hybridantrieb, umfassend einen Rotor (100) gemäß einem der Ansprüche 1 bis 5.

## Claims

1. Rotor (100) for an electric machine, in particular for an electric motor for the traction drive of a motor vehicle having an electric or hybrid drive, having a rotor shaft or a rotor carrier (200) and a plurality of laminated rotor cores (300, 300a, 300b, 300c) arranged thereon in a twist-proof manner by means of a shaft-hub connection formed as a spline,
wherein adjacent laminated rotor cores (300, 300a, 300b, 300c) are attached to the rotor shaft or the rotor carrier (200) so as to be offset by at least one tooth spacing and, as a result, have an angular offset (W) relative to one another,
**characterized in that**
the spline is formed in segments in such a way that the external toothing on the rotor shaft or the rotor carrier (200) is formed only in specific external circumferential segments, and that the internal toothing on the laminated rotor cores (300, 300a, 300b, 300c) is formed only in specific internal circumferential segments,
wherein the external toothing segments (240) on the rotor shaft or the rotor carrier (200) comprise more teeth than the internal toothing segments (340, 340a, 340b, 340c) on the laminated rotor cores (300, 300a, 300b, 300c) or, conversely, the internal toothing segments (340, 340a, 340b, 340c) on the laminated rotor cores (300, 300a, 300b, 300c) comprise more teeth than the external toothing segments (240) on the rotor shaft or the rotor carrier (200).

2. Rotor (100) according to Claim 1,
**characterized in that**
the laminated rotor cores (300) have pockets (330) for receiving permanent magnets.

3. Rotor (100) according to Claim 1 and in particular according to Claim 2,
**characterized in that**
adjacent laminated rotor cores (300) are attached to the rotor shaft or the rotor carrier (200) so as to be offset by a plurality of tooth spacings, preferably at least five and in particular at least seven tooth spacings.

4. Rotor (100) according to one of the preceding claims,
**characterized in that**
the spline has three segments (240, 340), which are formed at 120° intervals.

5. Rotor (100) according to one of the preceding claims,
**characterized in that**
markings (260, 360) are applied to some teeth of the spline, which permit orientation when attaching the laminated rotor cores (300) to the rotor shaft or the rotor carrier (200).

6. Electric motor for the traction drive of a motor vehicle having an electric or hybrid drive, comprising a rotor (100) according to one of Claims 1 to 5.

## Revendications

1. Rotor (100) destiné à une machine électrique, en particulier à un moteur électrique, pour la propulsion d'un véhicule automobile à propulsion électrique ou hybride, ledit rotor comprenant un arbre de rotor ou un support de rotor (200) et une pluralité de noyaux feuilletés (300, 300a, 300b, 300c) disposés solidairement en rotation sur celui-ci par une liaison arbre-moyeu conçue comme une denture enfichable, des noyaux feuilletés adjacents (300, 300a, 300b, 300c) étant enfichés sur l'arbre de rotor ou le support de rotor (200) en étant décalés d'au moins un espacement de dent et comportant ainsi un décalage angulaire (W) les uns par rapport aux autres,
**caractérisé en ce que**
la denture enfichable est conçue sous la forme de segments de sorte que la denture extérieure située sur l'arbre de rotor ou le support de rotor (200) est formée uniquement de segments périphériques extérieurs déterminés et les dentures intérieures situées sur les noyaux feuilletés (300, 300a, 300b, 300c) ne sont formées que de segments périphériques intérieurs,
les segments de denture extérieurs (240) situés sur l'arbre de rotor ou le support de rotor (200) comprenant plus de dents que les segments de denture intérieurs (340, 340a, 340b, 340c) situés sur les noyaux feuilletés (300, 300a, 300b, 300c) ou inversement les segments de denture intérieurs (340, 340a, 340b, 340c) situés sur les noyaux feuilletés (300, 300a, 300b, 300c) comprenant plus de dents que les segments de denture extérieurs (240) situés sur l'arbre de rotor ou le support de rotor ( 200).

2. Rotor (100) selon la revendication 1,
**caractérisé en ce que**
les noyaux feuilletés (300) comportent des poches (330) destinées à recevoir des aimants permanents.

3. Rotor (100) selon la revendication 1 et notamment selon la revendication 2,
**caractérisé en ce que**
des noyaux feuilletés adjacents (300) sont enfichés sur l'arbre de rotor ou le support de rotor (200) en étant décalés de plusieurs espacements de dent, de préférence au moins cinq et en particulier au moins sept espacements de dent.

4. Rotor (100) selon l'une des revendications précédentes,
**caractérisé en ce que**
la denture enfichable comprend trois segments (240, 340) espacés de 120°.

5. Rotor (100) selon l'une des revendications précédentes,
**caractérisé en ce que**
des repères (260, 360) sont appliqués sur certaines dents de la denture enfichable, lesquels repères permettent de s'orienter lorsque le noyau feuilleté (300) est enfiché sur l'arbre de rotor ou le support de rotor (200).

6. Moteur électrique destiné à la propulsion d'un véhicule automobile à propulsion électrique ou hybride, ledit moteur électrique comprenant un rotor (100) selon l'une des revendications 1 à 5.
